Europäisches Patentamt

European Patent Office

Office européen des brevets

(11) Veröffentlichungsnummer: **0 286 817 B1**

# EUROPÄISCHE PATENTSCHRIFT

(45) Veröffentlichungstag der Patentschrift: **27.11.91**

(51) Int. Cl.⁵: **H05B 6/78**, H05B 6/72, A23L 3/00

(21) Anmeldenummer: **88103248.6**

(22) Anmeldetag: **03.03.88**

(54) **Vorrichtung zum gleichmässigen und schnellen Erwärmen, Pasteurisieren oder Sterilisieren von Lebensmitteln oder dergleichen.**

(30) Priorität: **15.04.87 DE 3712753**

(43) Veröffentlichungstag der Anmeldung:
**19.10.88 Patentblatt 88/42**

(45) Bekanntmachung des Hinweises auf die Patenterteilung:
**27.11.91 Patentblatt 91/48**

(84) Benannte Vertragsstaaten:
**CH DE FR GB IT LI SE**

(56) Entgegenhaltungen:
**DE-A- 1 440 532**
**DE-A- 1 565 259**
**DE-B- 1 184 877**
**FR-A- 2 547 732**
**GB-A- 597 832**

(73) Patentinhaber: **HERMANN BERSTORFF Maschinenbau GmbH**
**An der Breiten Wiese 3/5**
**W-3000 Hannover 61(DE)**

(72) Erfinder: **Koch, Klaus, Dipl.-Phys.**
**Feldstrasse 2**
**W-3014 Laatzen 4(DE)**
Erfinder: **Klemm, Manfred**
**Hildesheimer Strasse 122**
**W-3014 Laatzen 1(DE)**

**Beschreibung**

Die Erfindung betrifft eine Vorrichtung mit den Merkmalen gemäß dem Oberbegriff von Patentanspruch 1.

Aus der DE 34 47 544 A1 ist eine derartige Vorrichtung bekannt. Sie weist eine längliche Mikrowellenbehandlungskammer mit einem durch die Kammer geführten, endlosen Transportband auf. In die Behandlungskammer werden von oben Mikrowelleneinspeisekanäle geführt, an die jeweils ein Mikrowellengenerator angeschlossen ist. Ein mit dem Mikrowellengenerator verbundenes Regelgerät schaltet die Generatoren immer dann ab, wenn die Ränder einer zu beaufschlagenden Packung unter die Einspeiseöffnung hindurchlaufen, um ein Überhitzen der Packungsränder zu vermeiden. Durch z.B. eine Fotozelle oder eine andere beliebige Einrichtung, die ebenfalls an dem Regelgerät angeschlossen ist, wird dem Regelgerät ein Signal übermittelt, wenn die Stirnseiten der auf dem Transportband befindlichen Lebensmittel unter den Einspeiseöffnungen der Mikrowellengeneratoren hindurchlaufen.

Eine gleichmäßige und schnelle Aufheizung läßt sich mit dieser Einrichtung nicht verwirklichen.

Aus der DE-PS 12 91 429 ist eine Vorrichtung zum dielektrischen Erwärmen von Stoffen bekannt, die mit einem Mikrowellengenerator und mit einem Hochfrequenzgenerator gespeist wird. An den kammerseitigen Enden der Hohlleiter sind auswechselbare Feldformer angeordnet, mittels welcher gezielt auf die Eindringtiefe der Mikrowellenenergie in das Produkt, d.h. auf die Bündelung der Mikrowellenenergie, eingegangen werden kann.

Eine gleichmäßige Erwärmung eines Produktes über die gesamte Produktgröße bzw. Fläche ist mit dieser Vorrichtung nicht durchführbar, weil eine Steuerung der Eindringtiefe eine gezielte Energiebündelung voraussetzt und darüber hinaus von dem jeweiligen zu erwärmenden Produkt abhängig ist.

Es ist die Aufgabe der Erfindung, die gattungsgemäße Vorrichtung derart zu verbessern, daß eine sehr gleichmäßige und schnelle sowie energiesparende Temperierung von Lebensmitteln mittels Mikrowellenenergie in einer länglichen Behandlungskammer durchführbar ist, wobei der Vorteil eine Überhitzung der Ränder zu verhindern, erhalten bleiben soll.

Die Aufgabe wird durch die in Anspruch 1 beschriebenen Merkmale gelöst. Vorteilhafte Weiterbildungen der Vorrichtung sind in den Unteransprüchen angegeben.

Durch die Ausbildung des Querschnitts der einzelnen Mikrowellenaustrittsöffnungen der von oben und/oder unten in die Behandlungskammer ragenden Mirkowelleneinspeisekanäle geometrisch etwa entsprechend der Form des von der Austrittsöffnung der Mikrowellen her gesehenen äusseren Umrisses der Oberfläche des zu behandelnden Lebensmittels, z.B. bei einer runden Packung auch runde Austrittsquerschnitte der Einspeisekanäle bzw. bei einer quadratischen oder rechteckigen Packung entsprechende Austrittsöffnungen, wird eine sehr effektive und wirtschaftliche Energieeinleitung mit sehr geringen Abstrahlungsverlusten erreicht. Außerdem wird eine gleichmässige Erwärmung von den Rändern zur Produktmitte wesentlich begünstigt.

Eine weitere Verbesserung hinsichtlich einer gleichmäßigen und wirtschaftlichen Energieeinleitung in das Produkt, wird durch die Festlegung der jeweiligen Flächenverhältnisse, d.h. der Querschnitte der Mikrowellenaustrittsöffnung der Einspeisekanäle zur Fläche der Form des von der Austrittsöffnung der Mikrowellen her gesehenen äußeren Umrisse der Oberfläche des zu behandelnden Produktes erreicht. Das Verhältnis wird von 1:2 bis 1:8, vorzugsweise 1:4 bis 1:6 und insbesondere 1:4 gewählt. Die besten Werte werden dabei erreicht, wenn das Verhältnis Querschnittsfläche Mikrowellenaustrittsöffnung zur Produktoberfläche von 1 : 4 eingehalten wird.

Wird ein Abstand von der Austrittsöffnung zur Produktoberfläche von gleich oder kleiner einer Wellenlänge (z.B. weniger als 12 cm bei einer 12 cm Welle (2.450 GHz) eingehalten, erhöht sich die Energieeinleitung nochmals, wobei insbesondere eine sehr gleichmäßige Temperaturverteilung über die Produktfläche, d.h. von der Mitte zu den Rändern erreicht wird.

Die geometrisch ähnlichen Austrittsquerschnittsformen

    a) des Querschnitts der Mikrowellenaustrittsöffnung und

    b) der Form des von der Austrittsöffnung der Mikrowellen her gesehenen äußeren Umrisse der Oberfläche des zu behandelnden Produktes

sind besonders vorteilhaft, weil durch diese Maßnahme die Abstrahlung bzw. die über die Ränder des Produktes hinweggehende Strahlen der eingespeisten Mikrowellenenergie verringert wird, so daß die Randbezirke der Packung weniger energiebeaufschlagt werden, wodurch die schädliche Ränderüberhitzung vermieden wird. Die nicht direkt in das Produkt eingespeiste Energie verbleibt in der Behandlungskammer als diffus verteilte Energie geringer Dichte.

Wird beispielsweise mit einem runden Querschnitt der Mirowellenaustrittsöffnung gearbeitet und es soll eine rechteckige Verpackung beaufschlagt werden, ist der Anteil der direkten kontrollierbaren Energieeinstrahlung geringer, so daß ein ungleichmäßiges Temperaturfeld im Produkt entsteht.

Durch die Anordnung von Verschiebehülsen auf die Enden der Einspeisekanäle wird in vorteilhafter Weise eine einfache Verstellmöglichkeit des Abstandes von der Austrittsöffnung zur Produktoberfläche erreicht.

Die Verschiebung der Hülse kann bei runden Einspeisekanälen durch das Anbringen eines Gewindes auf dem Einspeisekanal, welches mit einem Innengewinde der Hülse zusammenwirkt, verwirklicht werden.

Bei rechteckigen Einspeisekanälen kann die Verschiebehülse z.B. durch Zahnstangentriebe auf dem Einspeisekanal, die mit drehbaren Antriebsritzeln an der Hülse zusammenwirken, verschoben werden, um den Abstand von der Austrittsöffnung zur Produktoberfläche verstellen zu können, wodurch eine erheblich verbesserte, direkte und kontrollierbare Energieeinstrahlung in das Produkt begünstigt wird.

Nachfolgend wird ein bevorzugtes Ausführungsbeispiel der Erfindung anhand einer Zeichnung erläutert.

Es zeigt:

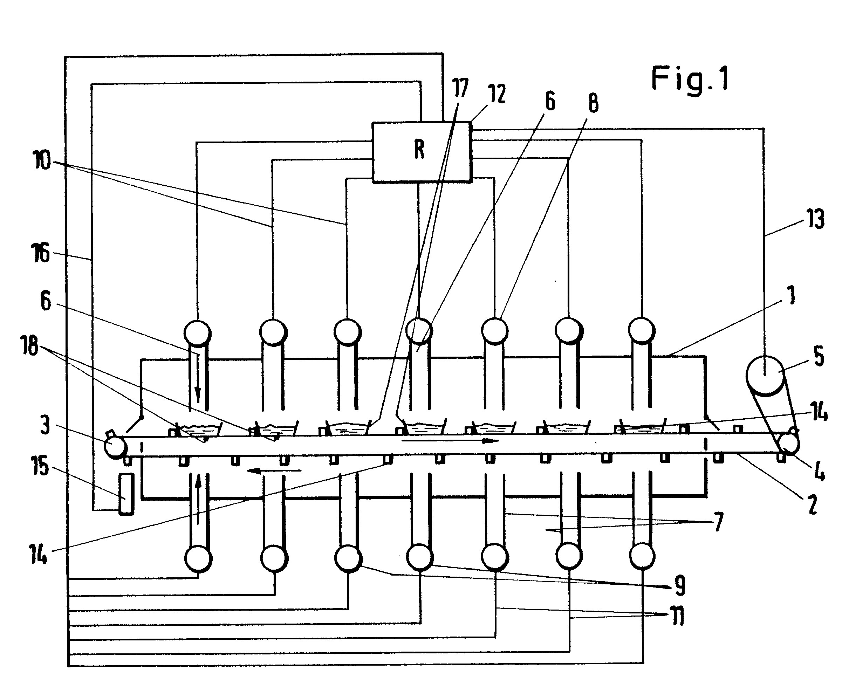

Fig. 1      einen schematisierten Längsschnitt durch eine Mikrowellenanlage.

Fig. 2      einen Querschnitt durch die Enden der Einspeisekanäle.

Fig. 3 - 5      Temperaturverteilungsdarstellungen bei unterschiedlichen Abständen.

Durch die Behandlungskammer 1 wird ein endloses Transportband 2 geführt und um die Umlenkrollen 3 und 4 umgelenkt. An der Umlenkrolle 4 ist ein schematisiert dargestellter Antrieb 5 angeschlossen.

In die Behandlungskammer münden obere Mikrowelleneinspeisekanäle 6 und untere Mikrowelleneinspeisekanäle 7 ein, an die jeweils obere Generatoren bzw. Magnetrone 8 bzw. untere 9 für die Erzeugung der Mikrowellenenergie angeschlossen sind.

Die oberen Magnetrone 8 sind mittels der Leitungen 10 und die unteren Magnetrone 9 mittels der Leitungen 11 an ein computergesteuertes Regelgerät 12 angeschlossen.

Der Antrieb 5 ist durch eine Leitung 13 mit dem Regelgerät verbunden, um evtl. auch einen taktweisen Betrieb des Transportbandes 2 zu ermöglichen.

Auf dem Transportband 2 sind, falls die Anlage taktweise betrieben werden soll, Markierungsleisten 14 in regelmäßigen Abständen angebracht. Anstelle der Markierungsleisten können auch farbliche, durch eine Fotozelle erkennbare Markierungen oder für Näherungsschalter erkennbare Metallteile vorhanden sein.

Zwecks Abtastung der Markierungen bzw. - leisten wird bei diesem Ausführungsbeispiel eine Fotozelle 15 vorgesehen, die mittels der Leitung 16 mit dem Regelgerät 12 verbunden ist.

Anhand eines praktischen Beispiels wird nachfolgend die Funktionsweise der Mikrowellenanlage erläutert.

In die Lebensmittelverpackung aus z.B. einer tiefgezogenen und versiegelten Kunststoffolie wird ein vorgefertigtes Lasagne-Gericht eingegeben, das einem Pasteurisiervorgang unterworfen werden soll, um Keime abzutöten zwecks Verlängerung der Verbrauchszeit bzw. der Haltbarkeit.

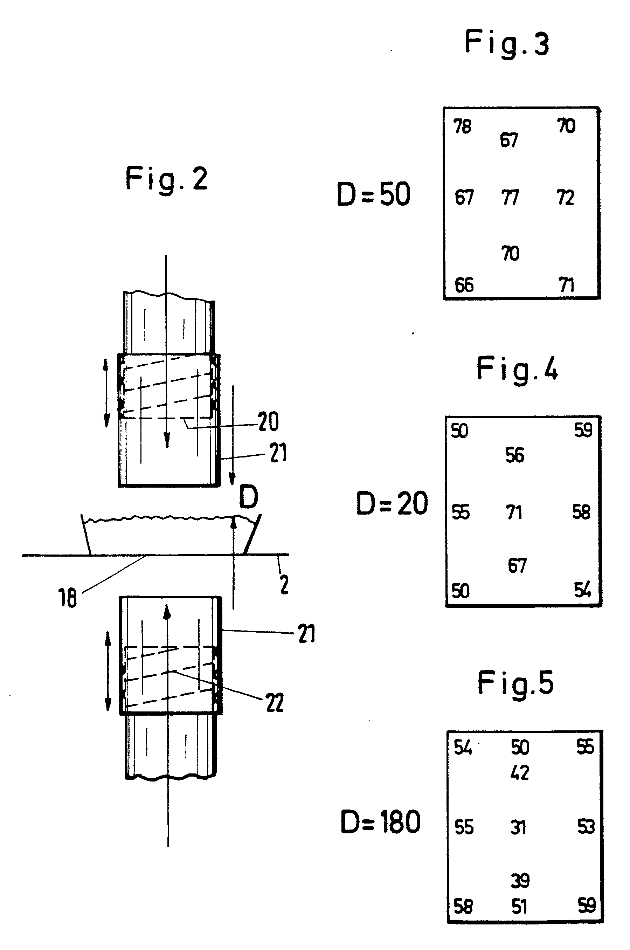

Die Packungen haben folgende Abmessungen (Fig. 3):

Länge:      190 mm
Breite:      140 mm
Höhe:      28 mm
Gewicht:      400 g

Nachfolgend wird ein Beispiel beschrieben, welches unter Zurhilfenahme einer taktweisen Beaufschlagung mit Mikrowellenenergie durchgeführt wurde. Die taktweise Energiebeaufschlagung ist jedoch für die gleichmäßige Erwärmung des Produktes über die gesamte Produktfläche nicht von Bedeutung.

Um die für einen Pasteurisiervorgang erwünschte Produkttemperatur von 80° C eine Minute lang aufrecht zu erhalten, wird ein Leistungsbedarf von 2,4 kW pro Packung für die Durchlaufzeit errechnet, wobei von einer Produkteingangstemperatur von 20° C ausgegangen wird.

Das Regelgerät wird folgendermaßen eingestellt:

a) Alle oberen Magnetrons 8 und unteren Magnetrons 9 werden auf eine Leistungsabgabe von je 1,2 Wh programmiert, so daß von unten und von oben jeweils durch die Einspeisekanäle 6 und 7 zusammen eine Mikrowellenleistung von 2,4 KW auf jede Lasagne-Packung 1 Minute lang einwirkt.

b) Es sind sieben obere und sieben untere Einspeisekanäle 6 und 7 vorhanden. Die Gesamtbeaufschlagungszeit von einer Minute wird aufgeteilt auf 8,5 Sekunden pro oberer und unterer Einspeiseöffnung, d.h. die Verweilzeit des Transportbandes mit der Lasagne-Packung im Mittelpunkt 18 der Energieeinspeiseöffnung 6 und 7, beträgt jeweils 8,5 Sekunden.

Es wird somit eine Gesamtenergiebeaufschlagungszeit von 7 x 8,5 Sekunden 1 Minute bei konstanter Mikrowellenleistungsabgabe von 2,4 kW verwirklicht, und zwar jeweils mit der vollen erforderlichen Leistung von 2,4 kW pro Packung.

Entsprechend der rechteckigen Packungsoberfläche von 190 x 140 mm wird ein rechteckiger Mikrowelleneinspeisekanalquerschnitt von 43 x 86 mm eingesetzt. Beide Austrittsquerschnittsformen beziehen sich somit auf geometrisch etwa ähnliche Rechtecke.

Die Querschnittsfläche der Austrittsöffnung des Mikrowelleneinspeisekanals bei Abmessungen von 43 mm x 86 mm beträgt
3.700 mm²
die Packungsoberfläche von 190 x 140 mm beträgt
26.600 mm²

Es ergibt sich somit ein Verhältnis der beiden Flächen von rund 1 : 7.

Der Abstand (D) von der Austrittsöffnung zur Produktoberfläche beträgt 50 mm (D = 50 mm).

Zur Anwendung gelangte eine Mikrowellenanlage, die mit einer Wellenlänge von 12 cm bzw. 120 mm arbeitet (Frequenz von 2.450 GHz).

Die Temperaturverteilung in der Verpackung wird in Fig. 3 wiedergegeben.

Aus Fig. 3 wird ersichtlich, daß die Temperaturdifferenz in der Pakkung, insbesondere hinsichtlich der Randbereiche nur gering ist, so daß ein Verbrennen der Randbereiche vermieden wird. Es wird eine sehr gleichmäßige Keimabtötung über die gesamte Fläche festgestellt.

Bei einem in Fig. 4 dargestellten Vergleichsversuch mit 20 mm (D = 20 mm) Abstand zwischen der Mikrowellenkanalaustrittsöffnung von 43 x 86 mm und der Produktoberfläche von 190 x 140 mm werden Werte ermittelt mit einer Verteilung über die Produktfläche, wie angegeben.

Die Temperatur im Produktmittelpunkt ist mehr als 25 % höher als an den Rändern.

Ein derartiges Temperaturprofil ist hinnehmbar, weil sich eine Temperaturvergleichmäßigung einstellt durch ein Wandern der Innentemperatur nach außen.

Bei dem in Fig. 5 gezeigten Beispiels mit gleichem Austrittsquerschnitt und Packungsgröße, wie in Fig. 3 und 4, betrug der Abstand Einspeiseöffnung - Produktoberfläche 180 mm (D = 180 mm), also mehr als die Wellenlänge von 120 mm.

Das Temperaturprofil zeigt deutlich, daß die Ränder fast doppelt so hoch erhitzt wurden als der Mittelpunkt.

Wird ein Pasteurisiervorgang unter Beibehaltung eines Abstandes von 180 mm durchgeführt, mit dem Zweck im Produktmittelpunkt die Pasteurisiertemperatur von 80° C zu erreichen, ergeben sich Randtemperaturen von etwa 120° C und höher, die ein Entflammen des Produktes nach sich ziehen bzw. ein Aufplatzen der Packungen durch den Dampfdruck verursachen.

## Patentansprüche

1. Vorrichtung zum gleichmäßigen und schnellen Erwärmen, Pasteurisieren oder Sterilisieren von Lebensmitteln, welche eine längliche Mikrowellenbehandlungskammer aufweist, durch die die Lebensmittel auf einem endlosen Transportband geführt werden, und wobei die Lebensmittel sich in Behältern (17) oder in abgeschlossenen, Mikrowellen durchlässigen Verpackungen befinden, mit in die Behandlungskammer (1) geführten Mikrowelleneinspeisekanälen (10, 11), an die ein oder mehrere Mikrowellengeneratoren (8, 9) angeschlossen sind, mit einem von einem Mikroprozessor gesteuerten Regelgerät (12) für die Generatoren (8, 9), mit einer mit dem Regelgerät (12) verbundenen Abtasteinrichtung (15),

**dadurch gekennzeichnet, daß**

a) die Form des Querschnitts der Mikrowellenaustrittsöffnung der von oben und/oder unten in die Behandlungskammer ragenden Mikrowelleneinspeisekanäle geometrisch etwa entsprechend der Form des von der Austrittsöffnung der Mikrowellen her gesehenen äußeren Umrisses der Oberfläche des zu behandelnden Lebensmittels ausgebildet ist,

b) die Formen des Querschnitts der Mikrowellenaustrittsöffnung und des äußeren Umrisses quadratisch, rechteckig oder rund sind,

c) der Abstand (D) von der Austrittsöffnung zur Oberfläche des zu behandelnden Lebensmittels gleich oder kleiner einer Wellenlänge der eingesetzten Mikrowellenenergie ist,

d) die Abtasteinrichtung (15) für den Fall eines taktweisen Betriebes vorgesehen ist, um für diesen Fall auf dem Transportband (2) in regelmäßigen Abständen angebrachte Markierungen (14) abzutasten.

2. Vorrichtung nach Anspruch 1,

**dadurch gekennzeichnet,**

daß die Fläche der Querschnitte der Mikrowellenaustrittsöffnungen der Mikrowelleneinspeisekanäle (6, 7) zur Fläche des von der Austrittsöffnung der Mikrowellen her gesehenen äußeren Umrisses der Oberfläche des zu behandelnden Lebensmittels in einem Verhältnis von 1 : 2 bis 1 : 8, vorzugsweise 1 : 4 bis 1 : 6, insbesondere 1 : 4, gewählt wird.

3. Vorrichtung nach Anspruch 1,

**dadurch gekennzeichnet,**

daß die Wellenlänge 12 cm beträgt, entsprechend der Frequenz f = 2,450 GHz.

4. Vorrichtung nach Anspruch 1,

**dadurch gekennzeichnet,**

daß auf den, in die Behandlungskammer (1) ragenden Einspeisekanalenden (20) vertikal verschiebbare und arretierbare, den Abstand von der Austrittsöffnung bis zur Produktoberfläche verändernde runde oder rechteckige Hülsen (21) angeordnet sind.

## Claims

1. Apparatus for the uniform and rapid heating, pasteurisation or sterilisation of foodstuffs, which comprises an elongate microwave treatment chamber, through which the foodstuffs are guided on an endless conveyor belt, and wherein the foodstuffs are contained in containers (17) or in sealed packs permeable to microwaves, comprising microwave supply conduits (10, 11) which project into the treatment chamber (1) and communicate with one or a plurality of microwave generators (8, 9), comprising a control device (12), which is controlled by a microprocessor, for controlling the generators (8, 9), [and] comprising a scanning means (15) connected to the control device (12), characterised in that
   a) the cross-sectional shape of the microwave discharge outlet of the microwave supply conduits, which project into the treatment chamber from above and/or below, is geometrically adapted to correspond generally with the shape of the outer configuration of the surface of the foodstuff to be treated, when viewed from the discharge outlet for the microwaves;
   b) the cross-sectional shapes of the microwave discharge outlet and of the outer configuration are square, rectangular or circular;
   c) the spacing (D) between the discharge outlet and the surface of the foodstuff to be treated is equal to or shorter than one wavelength of the microwave energy used;
   d) the scanning means (15) is provided in the case where an operation is effected at timed intervals, in order to scan markers (14) applied to the conveyor belt (2) at regular intervals for this purpose.

2. Apparatus according to claim 1, characterised in that the ratio of the cross-sectional area of the microwave discharge outlets of the microwave supply conduits (6, 7) to the area of the outer configuration of the surface of the foodstuff to be treated, when viewed from the discharge outlet for the microwaves, is selected to be from 1:2 to 1:8, preferably 1:4 to 1:6, more especially 1:4.

3. Apparatus according to claim 1, characterised in that the wavelength is 12 cm, corresponding to the frequency f = 2.450 GHz.

4. Apparatus according to claim 1, characterised in that vertically displaceable and lockable, circular or rectangular sleeves (21), which vary the spacing between the discharge outlet and the surface of the product, are disposed on the ends (20) of the supply conduits which project into the treatment chamber (1).

## Revendications

1. Dispositif de chauffage, de pasteurisation ou de stérilisation uniforme et rapide de vivres, présentant une chambre longitudinale de traitement aux micro-ondes à travers laquelle les vivres sont conduits sur un tapis transporteur sans fin, et dans laquelle les vivres se trouvent dans des conteneurs (17) ou dans des emballages clos, transparents aux micro-ondes, dispositif comportant des canaux (10, 11) d'émission des micro-ondes qui passent dans la chambre de traitement (1) et auxquels sont raccordés un ou plusieurs générateurs de micro-ondes (8, 9), comportant aussi un appareil de régulation (12), commandé par un microprocesseur, pour les générateurs (8, 9) ainsi qu'un dispositif de détection (15) relié à l'appareil de régulation (12),
   caractérisé par le fait que
   a) la forme de la section de l'ouverture de sortie des micro-ondes des canaux d'émission des micro-ondes pénétrant, de par le haut et/ou de par le bas, dans la chambre de traitement a une forme géométrique qui correspond à peu près à la forme du contour extérieur de la surface des vivres à traiter, vu depuis l'ouverture de sortie des micro-ondes,
   b) les formes de la section de l'ouverture de sortie du micro-onde et du contour extérieur sont carrées, rectangulaires ou rondes,
   c) la distance (D) entre l'ouverture de sortie et la surface des vivres à traiter est égale ou inférieure à une longueur d'onde de l'énergie des micro-ondes mise en oeuvre,
   d) l'organe de détection (15) est prévu pour le cas d'une exploitation cadencée pour détecter des repères (14) rapportés pour ce cas sur des tapis transporteurs (2) à distances régulières.

2. Dispositif selon la revendication 1,

caractérisé par le fait que l'on choisit une valeur de 1 : 2 à 1 : 8, de préférence 1 : 4 à 1 : 6, en particulier 1 : 4, pour le rapport entre la surface des sections des ouvertures de sortie des micro-ondes des canaux (6, 7) d'émission des micro-ondes et la surface de contour extérieur, vu depuis l'ouverture de sortie des micro-ondes, de la face supérieure des vivres à traiter.

3.  Dispositif selon la revendication 1,
    caractérisé par le fait que
    la longueur d'onde vaut 12cm, correspondant à la fréquence f = 2450 GHz.

4.  Dispositif selon la revendication 1,
    caractérisé par le fait que
    sur les extrémités (20) des canaux d'émission qui pénètrent dans la chambre de traitement (1) sont disposées des douilles (21), rondes ou rectangulaires, pouvant coulisser verticalement et se bloquer, modifiant la distance entre l'ouverture de sortie et la surface du produit.

Fig.1

EP 0 286 817 B1

## Fig. 3

D = 50

| | | |
|---|---|---|
| 78 | 67 | 70 |
| 67 | 77 | 72 |
| | 70 | |
| 66 | | 71 |

## Fig. 2

D

20

21

18

2

21

22

## Fig. 4

D = 20

| | | |
|---|---|---|
| 50 | 56 | 59 |
| 55 | 71 | 58 |
| | 67 | |
| 50 | | 54 |

## Fig. 5

D = 180

| | | |
|---|---|---|
| 54 | 50 | 55 |
| | 42 | |
| 55 | 31 | 53 |
| | 39 | |
| 58 | 51 | 59 |